# EUROPEAN PATENT SPECIFICATION

(11) **EP 4 262 107 B1**
(45) Date of publication and mention of the grant of the patent: **21.10.2026**
(21) Application number: 23167781.6
(22) Date of filing: 13.04.2023
(51) Int. Cl.: H04B 10/114, H04B 10/116

(54) **PORTABLE DEVICE FOR RECEIVING INFORMATION TRANSMITTED BY MEANS OF LIGHT SIGNALS AND RELATED TO OBJECTS PLACED WITHIN AN EXHIBITION ENVIRONMENT, AND INFORMATION TRANSMISSION SYSTEM USING SUCH DEVICE**
TRAGBARE VORRICHTUNG ZUM EMPFANG VON LICHTSIGNALEN UND OBJEKTEN IN EINER MESSEUMGEBUNG
DISPOSITIF PORTABLE POUR LA RÉCEPTION D'INFORMATIONS TRANSMISES PAR DES SIGNAUX LUMINEUX ET OBJETS PLACÉS DANS UN ENVIRONNEMENT D'EXPOSITION

(30) Priority: 14.04.2022 IT 202200007529
(43) Date of publication of application: 18.10.2023
(73) Proprietor: Consiglio Nazionale Delle Ricerche, 00185 Roma (IT)
(72) Inventor: CATANI, Jacopo, 50041 CALENZANO (IT)
(74) Representative: Lavoix

(56) References cited:
- WO-A1-2015/115717
- KR-A- 20180 035 552
- US-A1- 2011 031 160
- US-A1- 2012 080 469
- US-A1- 2017 307 382
- ALBRAHEEM LAMYA I ET AL: "Toward Designing a Li-Fi-Based Hierarchical IoT Architecture", IEEE ACCESS, vol. 6, 2018, pages 40811 - 40825, XP011688429, DOI: 10.1109/ACCESS.2018.2857627

## Description

The present invention relates to a portable device for receiving information transmitted by means of light signals and related to objects arranged within an exhibition environment or space, and an information transmitting system using such a portable device.

The portable device and the information transmission system according to the invention are particularly suitable for use in indoor environments, i.e., in substantially enclosed indoor environments, such as, for example, museums, shops, shopping centers, and will be described with specific reference to these areas without intending in any way to limit their possible application to other types of environments or spaces in which there may be objects of interest illuminated by one or more sources and of which a user may wish to receive information.

As is well-known, in recent decades the continuous development and diffusion of increasingly powerful and high-performance technologies and means of communication has made it possible to enrich the quality and quantity of services offered, for example to visitors of museums, art galleries, exhibition spaces, commercial spaces, etc.

For example, in museums, next to traditional audio guides, visitors can use their smartphones to access additional digital services, for example about the works they are observing, to download multimedia content in real time, to enjoy interactive applications in augmented reality, etc.

Although these solutions allow to offer a qualitatively adequate level of digital services, they still have some drawbacks that can be improved.

For example, wireless technologies based on radio waves, in which "local" networks are created within the environment through various "hotspots" arranged along a path, are usually used to access these services.

These local networks involve the use of complex handshaking protocols for the projection of the user in the network, typical of RF technologies, and usually have a remarkably high latency in the connection step, which in fact results in making too long the process of passing and docking to the contiguous hotspots.

In this way, the use of the services offered can be somewhat difficult if the user moves within an environment in which the various hotspots are arranged along the path.

Moreover, the theoretical band that can be obtained with such RF technologies is still relatively small.

In more recent solutions, the camera or the optical sensor integrated in a smartphone can be used directly to access the services offered.

In this case, however, it is necessary to continuously use the own smartphone, for example by keeping it pointed towards the object under observation.

This can clearly cause some discomfort for the users, who may have to assume unnatural positions that affect the visual experience and the use of digital content through their phone, for example to keep the camera or the optical sensor of their phone in the most correct position.

US 2011/0311031160 A1 discloses a wearable band designed to secure a cellular telephone around the neck of a person.

KR 2018/003552 A discloses a camera communication system which includes a light transmission unit which emits light toward an exhibition object. The information transmitted through the light source may be information related to the exhibition object including the name of the exhibition object and the description of the exhibition object. A receiving module, which includes a rolling shutter camera, uses the luminance information for each pixel output from the camera that captures an image of the exhibition object in which the exhibition object is provided in a blank area. Relevant data are decoded, form captured images, by determining bit information from an average luminance value of pixels.

WO 2015115717 A1 discloses a system for providing a shopping service to users by using visible light communication. The system comprises a visible light communication transmitting device, a shopping management server, a visible light communication receiving device, and a terminal. The visible light communication transmitting device acquires product-related information in conjunction with the shopping management server, converts the electrical signal for the product-related information into a visible light signal, and transmits it as a visible light signal to the visible light communication receiving device. The visible light communication receiving device obtains product output information using visible light from the visible light communication transmitting device and performs an operation to display the product output information on the terminal.

Published document "Toward Designing a Li-Fi-Hierarchical IoT Architecture", Albraheem Lamya I ET AL., discloses a navigation system based on light communication, wherein LEDs installed along a museum hall are equipped with Li-Fi technology to guide the visitors throughout their visit. Each LED sends light, containing information about a piece of art placed nearby, to a special application installed on a museum's tablet.

US 2017/0307382 A1 discloses a route guidance system for visitors in a venue, such as a museum, by using visible light communications. The system of comprises a visible-light illumination device, such as a LED, a route guidance apparatus and an information providing apparatus. The visible-light illumination device transmits light at visible light wavelength carrying a guidance information to the route guidance apparatus. When recognizing the route guidance apparatus within a visible light communication area, the visible-light illumination device transmits an optical signal including the guidance information to the route guidance apparatus. The route guidance apparatus, provided with an optical sensor, receives the optical signal from the visible-light illumination device and extracts the guidance information contained in the optical signal. The route guidance apparatus wirelessly transmits the current location information contained in the extracted guidance information to the information providing apparatus and receives from it the current distribution information of the visitors at respective places in the venue. Then, the route guidance apparatus can generate the recommended routes that pass through at least one common point of interest starting from the current locations.

US 2012/080469 A1 discloses an apparatus for enabling users to safely and conveniently carry out personal electronic wireless devices such as mobile telephones, such as a lanyard attached to the back of a mobile phone.

Therefore, the object of the present invention is to obviate, at least partially, one or more of the aforementioned drawbacks, and in particular to offer a solution that allows users to enjoy the digital services offered during the visit in indoor or outdoor exhibition environments, such as, e.g., museums, shops, commercial spaces etc., in a simplified and more effective way than the currently known solutions.

This object is achieved by a portable device whose features are defined in claim 1.

This object is further achieved by a system for transmitting information within an indoor environment according to claim 9.

Particular embodiments are the subject of the dependent claims, the content of which is to be understood as an integral part of the present description.

Further characteristics and advantages of the invention will appear from the following detailed description, made by way of a non-limiting example, with reference to the attached drawings, in which:
Fig. 1 is a view schematically illustrating a section of a device in accordance with the invention, which is usable within an environment in which there is an object of interest;
Fig. 2 is a block diagram schematically illustrating a system according to the invention, used within an exhibition environment and including the portable device of Fig. 1;
Fig. 3 schematically illustrates a visitor equipped with the portable device according to the invention during a visit in a museum environment;
Fig. 4 schematically illustrates a visitor equipped with the portable device according to the invention during a visit in a commercial environment, such as a shop.

It should be noted that in the following detailed description, identical or similar components, from a structural and/or functional point of view, may have the same or different reference numbers, regardless of whether they are shown in different embodiments of the present invention or in distinct parts.

It should also be noted that, in order to clearly and concisely describe the present invention, the drawings may not necessarily be to scale, and certain features of the description may be shown in somewhat schematic form.

In addition, where the term "adapted" or "configured" or "shaped", or a similar term is used herein with respect to any component as a whole, or any part of a component, it is to be understood as correspondingly comprising the structure and/or configuration and/or shape and/or positioning of the component or part to which it relates.

In particular, when such terms refer to hardware or software electronic means, they are to be understood as including electronic circuits or circuit parts, as well as software/firmware, such as for example algorithms, routines and programs in general, running and/or residing on any storage medium.

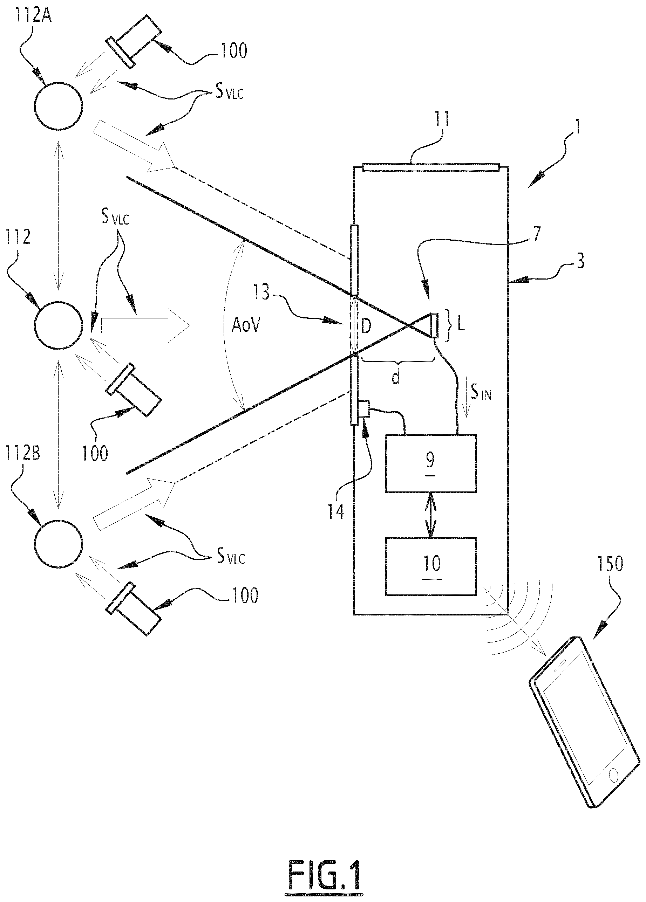

Fig. 1 schematically illustrates a possible embodiment of a portable device 1 according to the invention, for receiving information transmitted by exploiting light signals emitted from at least one light source 100 to illuminate at least one object of interest to which the light source is associated and which is located inside an environment or exhibition space, in particular an internal or indoor environment.

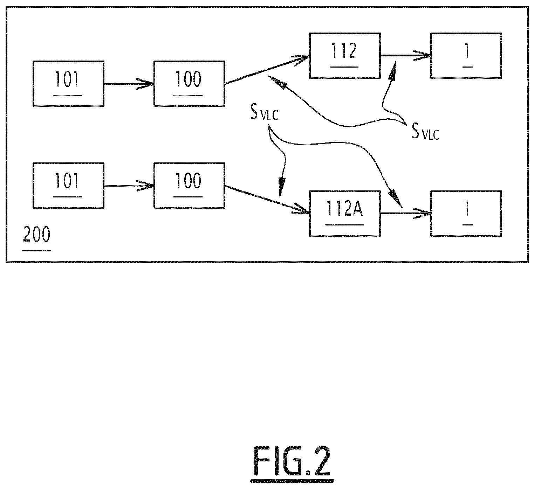

In turn, Fig. 2 schematically illustrates a system 200, of which the portable device 1 is part, for transmitting information within the exhibition environment in which one or more objects are arranged, each of which being illuminated by a corresponding light source 100.

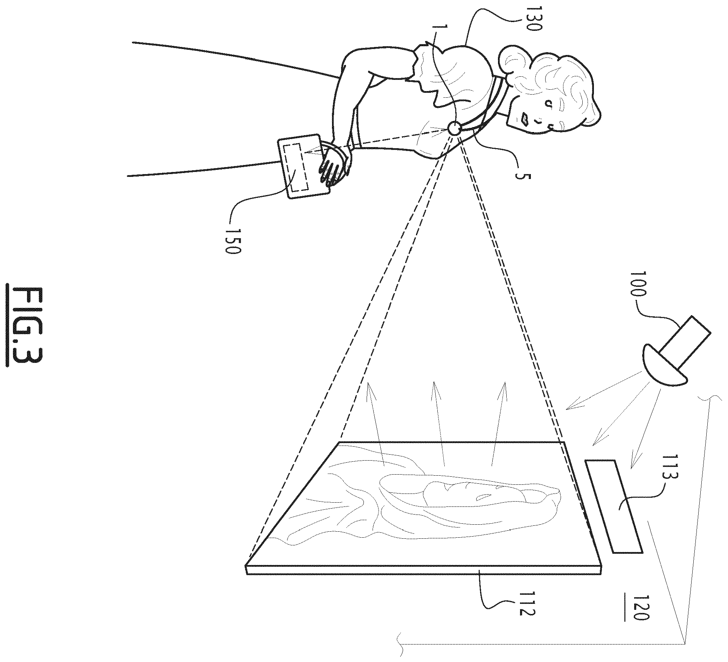

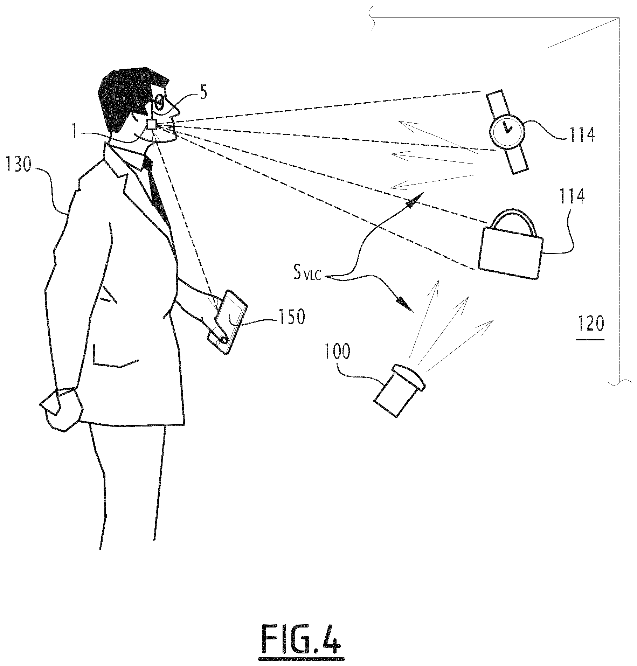

In particular, in the illustrative example of Fig. 3, such an environment, indicated by the reference number 120, is schematically represented by a room of a museum where a picture 112 is displayed, while in the illustrative example of Fig. 4 the environment 120 is schematically represented by a shop in which objects for sale, such as bags, shoes, watches, indicated by the reference number 114, are displayed.

Clearly, such examples of environment 120 are to be understood for illustrative and non-limiting purposes only, and the portable device 1 and the system 200 according to the invention are usable in any other environment suitable for the purposes of the present invention, as well as with any other type of objects arranged therein, such as environments in which there are, e.g., informative totems, various commercial, public or private premises of various nature, info points, etc..

Depending on the specific applications, one or more light sources 100 are arranged within the environment 120, each of which is associated with at least one of the objects exposed therein and is configured to emit light signals to illuminate it.

In the example of Fig. 3, a single light source 100 is uniquely associated and illuminates the picture 112 exposed in the environment 120; in the example of Fig. 4 a single light source illuminates a group of objects 114 formed by shoes, bags, watches that are for example placed in a showcase or on a store shelf.

According to embodiments known or easily achievable by a person skilled in the art, each light source 100 is suitably driven by an electronic device, indicated in Fig. 2 by reference number 101, so that the light signals emitted by it convey the information to be transmitted to a user 130 who is observing for example the picture 112 of the example of Fig. 3 or the objects 114 exposed in the example of Fig. 4.

In particular, there may be a single control device 101 for multiple light sources 100, or each light source 100 may be associated with a single control device 101, as illustrated in the example of Figure 2; the or each control device 101 is configured to pilot the or each light source 100 to emit, towards the object 112 or the objects 114, one or more light signals S_{VLC} the intensity of which is modulated to transmit information.

The term "information" is to be understood herein in the broadest possible sense, and such information may preferably contain data and/or contents of various kinds relating, for example to an observed object of interest, but also of a more general nature, relating, e.g., to the exhibition environment 120, etc.

Conveniently, in the portable device 1 and in the system 200 according to the invention, said one or more light sources 100 each comprise or consist of a corresponding modular light source, e.g., LED light source.

Alternatively, said one or more light sources 100 each comprise or consist of a corresponding laser type source.

As illustrated in Figure 1, the portable device 1 comprises a containment housing 3 provided with attachments means, schematically represented in Figures 3 and 4 by the reference numeral 5, which are configured to attach the portable device 1 to the body of a user 130, and in particular to a front part of the body when the user is visiting the environment or exhibition space 120.

Such attachment means 5 may comprise for example, but not limited to, a band, a hook, a strap that allows to hang the device 1 around the neck of the user 130 as for instance illustrated in Fig. 3, a pin, a clip that allows to hang the device 1 to the glasses of the user 130, as for example illustrated in Fig. 4.

Usefully, the portable device 1 according to the invention further comprises, arranged within the containment housing 3, an electronic control unit comprising a signal processor and schematically represented in Fig. 1 by the reference number 9, and an optical sensor, indicated by the reference number 7.

In particular, the optical sensor 7, which preferably comprises or consists of, e.g., a photodiode, is configured to:
- receive, when the user 130 faces and is observing an object 112, 114, at least a portion of the light signals S_{VLC} received and at least in part reflected or diffused in the environment 120 by said illuminated object or by an element that is associated with the object itself, i.e. arranged contiguous with it, and that is also adapted to diffuse or reflect the light signals S_{VLC}; and
- emit as input to the electronic control unit 9, and in particular to its signal processor, corresponding electrical signals S_{IN} indicative of the information carried by the received light signals.

This element associated with said object, schematically represented for simplicity only in Fig. 3 and indicated therein with reference number 113, may be for example a surface or a reflective or light-diffusing panel, a part, e.g., the frame of the picture or a plate fixed to it, etc. In turn, the electronic unit 9 is configured to process the electrical signals S_{IN} received in input from the optical sensor 7 and extract the information to be transmitted to the user 130 relating to the object of interest.

The electronic unit 9 can be constituted by any processor device, e.g., of a commercially available type, suitably programmed and supplied to the extent necessary with circuitry, in order to perform the innovative functionalities conceived for the device 1 according to the present invention.

In practice, when a user 130 wearing the wearable device 1 is in front of an object illuminated by the light source 100, for example when the user is observing the picture 112, said picture 112 and/or an element 113 associated with it, reflects or diffuses in the environment 120 and towards the user 130 at least a portion of the light projected by the light source 100. This reflected, projected, or diffused light is picked up by the optical sensor 7, which transduces it into electrical signals input to the electronic unit 9. The processor of the latter in turn appropriately processes the incoming received signals by extracting the transported information, relating for example to the exposed picture 112.

Suitably, the portable device 1 further comprises a communication module, schematically indicated in Fig. 1 by the reference numeral 10, which is operatively connected to the electronic unit 9 and is configured to transmit to a remote device 150, usable by the user 130, the information extracted by the signal processor.

The communication module 10 may be wired or wirelessly connected to the remote device 150, which may be for example a smartphone used by the user 130, as illustrated in the examples of Figures 3 and 4.

The extracted information may be conveyed to the user 130 without the smartphone 150 necessarily being held in hand, as for example illustrated in Fig. 3 where the smartphone 150 is shown stored in the bag of the visitor illustrated therein.

In a possible embodiment, optionally the portable device 1 can be provided with a small display, schematically represented in Fig. 1 by the reference numeral 11, which is for example arranged on one of the walls of the containment housing 3 and is operatively connected to the communication module 10 for displaying the information received.

Advantageously, the portable device 1 according to the invention further comprises configuration means for selectively modifying the field of view of said portable device 1. According to a possible embodiment, not in accordance with the appended claims, said configuration means are configured to be manually operable.

According to the claimed invention, said configuration means are configured to be automatically operable.

In particular, according to the invention, the electronic unit 9 is configured to automatically operate said configuration means based on at least one or more of the information transmitted by means of the light signals S_{VLC} emitted by the light source 100 and received by the receiving element 7.

In addition, the electronic unit 9 is configured to automatically actuate the configuration means, e.g., based on one or more predefined parameters, such as for example but not limited to, pre-configured location maps on board the portable device 1, for example in a memory unit thereof, or on board a remote device, such as the same smartphone 150, or on another remote device operatively connectable to the portable device 1.

In a possible embodiment, the configuration means comprises a shutter or variable aperture diaphragm 13 arranged frontally and at a predetermined distance from the optical sensor 7 at an outer wall of the containment housing 3, as for example schematically illustrated in Fig. 1.

In the case of manual operation, for example the user can act directly on the shutter or diaphragm 13 by varying the opening as a function of the information received; alternatively, in the case of automatic operation, the electronic unit 9 can send a signal to a shutter operating device, schematically illustrated in Fig. 1 by the reference numeral 14.

For example, with reference to Fig. 1, assuming that the optical sensor 7 is a photodiode with a diameter "L" of 10 mm, and that the diaphragm 13 has a variable aperture with diameter "D" located at a distance "d" from the photodiode, the angle of view ("Angle of View"- AoV) determines the value of the diameter D through the relationship D=2d*tan(AoV) - L.

In a first example, a visitor 130 in a room 120 of a museum in which the typical lateral separation between the works is 5m, with an observation distance from a work of about 5m, may be considered.

In this case, the total angle of view (AoV) of the receiver shall be less than 90° to avoid interference with signals from light scattered from other nearby works.

This angle is obtained by selecting an aperture D = approximately 19 mm.

In the case of a showcase with illuminated objects separated by 50 cm and a typical observation distance of about 2 m, the maximum allowed AoV is therefore about 30°.

In this case, the aperture D that allows to avoid interference with signals from contiguous objects is about 4mm.

In such cases, the information about the optimal aperture D is encoded in the light signals S_{VLC} emitted from a light source 100 and can be extracted and used directly in automatic mode by the electronic unit 9 to vary the aperture of the shutter or diaphragm 13, or it can be transmitted to the user 130 who can manually intervene on the shutter itself.

In this way, the choice of an angle of view or aperture for the receiver, adapted to each specific use case, allows to avoid optical interference caused by signals from nearby "hotspots", i.e., the light sources 100 or objects close to the object of interest reflecting the light dedicated to them.

It has been observed in practice that the portable device 1 and the system 200 according to the invention make it possible to fulfil the intended purpose in that, by exploiting the technology of communication with visible light ("Visible Light Communication or VLC") which has a very directional communication channel, a much lower latency and a much wider communication band than other wireless technologies based on radio waves, it allows to transmit the desired or useful information to users in an extremely simple, faster, targeted and effective way.

In particular, as previously described, the information to be transmitted is encoded as digital information in the light emitted by the light sources 100, in such case the lighting lamps of objects acting as hotspots; each hotspot allows to create point-to-point connections between said hotspot and the wearable device 1 worn by a user, wherein the information conveyed from each hotspot may be different from that emitted from a neighboring hotspot, since the receiver (user) will receive only the signal contained in the light field emitted from a single source and reflected or diffused by the object it is observing and not from that from a neighboring hotspot.

The fact that the receiving device is configured to be hung on a front part of the user's body allows the photo- receiving element 7 always to be substantially aligned with the point of view of the user himself, without this necessarily having to "point" a device manually towards the object of interest, thus receiving the information contained in the light used to illuminate and diffuse from the object of interest and/or the element associated with it in a completely natural way, allowing freedom of movement to the user.

In addition, the user can be provided with information, dedicated and personal infotainment/augmented reality/advertising services, and it is also possible to create location protocols, in particular in indoor environments, where GPS location is ineffective, which allow the local network operator - be it a museum, a business activity, etc. - to have real-time information on how they are distributed and how users move within the area of interest.

To achieve this, components of easy and low-cost realization and assembly are used, being based on consumer electronics; moreover, the portable device 1 can be suitably sized according to the applications, and in particular highly miniaturized if desired.

Moreover, by equipping the user with such a device 1, e.g., at the entrance to a museum or a store can contribute to the attractiveness of the museum/store itself in terms of "technological curiosity", since the user will in practice feel more enticed to take advantage of digital services precisely because of having an additional "intelligent" physical device on him/her.

Of course, the principle of the invention remaining the same, the embodiments and the details of embodiment can be varied widely from what has been described and illustrated purely by way of preferred but non-limiting examples, without departing from the scope of protection of the present invention as defined in particular by the attached claims. For example, in addition to those described above, other suitable supports may be used to hook the device 1 to any front part of the user's body 130. The optical sensor can be of any type suitable for the purpose, e.g., in one embodiment the optical sensor 7 can comprise or consist of a charge-coupled device or CCD, of any type of suitable light sensor, e.g. of the pixel type; a lens, positionable both in front of the shutter and between the shutter and the sensor, could also be arranged in front of the sensor, etc..

## Claims

1. Portable device (1) for receiving information transmitted by means of light signals (S_{VLC}) emitted from at least one light source (100) for illuminating at least one object of interest (112, 114) disposed within an environment (120), comprising at least:
- a containment housing (3) provided with attachments means (5) suitable for attaching the portable device (1) to the body of a user (130) when visiting the environment (120); and, positioned within the containment housing (3):
- an optical sensor (7) configured to receive, when said user (130) is observing said object of interest (112, 114), at least a portion of the light signals (S_{VLC}) received and reflected or diffused in the environment from at least one of said object of interest (112, 114) and an element (113) associated with said object of interest, and to emit corresponding electrical signals (S_{IN}) indicative of said information contained in the light signals emitted by the light source (100);
- an electronic control unit (9) configured to process said electrical signals (S_{IN}) received in input from the optical sensor (7) and extract from them said information to be transmitted to the user (130);
- configuration means (13, 14) for selectively changing the field of view of the portable device (1), wherein said configuration means are configured to be operated automatically, and wherein said electronic control unit (9) is configured to automatically operate said configuration means (13, 14) based on at least one or more of the information transmitted by means of the light signals (S_{VLC}) emitted by the light source (100) and received by the optical sensor (7).

2. Portable device (1) according to claim 1, further comprising communication means (10) operatively connected to said electronic control unit (9) and configured to transmit to a remote device (150) usable by the user (130) the information extracted from the electronic control unit (9).

3. Portable device (1) according to claim 1, wherein said electronic control unit (9) is configured to automatically operate said configuration means based on pre-configured location maps stored on board the portable device (1) or on board a remote device (150) operatively connectable to the portable device (1).

4. Portable device (1) according to claim 1, wherein said configuration means comprise a variable aperture diaphragm or shutter (13) positioned in front and at a predetermined distance from said optical sensor (7) at an outer wall of the containment housing (3).

5. Portable device (1) according to claim 1, wherein said configuration means further comprise an actuating device (14) configured to actuate said diaphragm or shutter (13) and operatively enslaved to the electronic control unit (9).

6. Portable device (1) according to one or more of the preceding claims, comprising a display (11) for displaying the received information.

7. Portable device (1) according to one or more of the preceding claims, wherein said optical sensor (7) comprises a photodiode.

8. Portable device (1) according to one or more of the preceding claims, wherein said attachments means (5) are selected from the group comprising a pin, a strap, a clip, a hook, a band.

9. A system (200) for transmitting information within an environment (120) in which there are positioned one or more objects of interest (112, 114), **characterized in that** it comprises:
- one or more light sources (100) placed within the environment (120), each of said one or more light sources (100) being associated with and configured to emit light signals (S_{VLC}) capable to illuminate at least one object of interest (112, 114) and carrying information intended to be transmitted to at least one user (130) when visiting the environment (120); and
- at least one portable device (1) according to one or more of the preceding claims, suitable for being bound to the body of said user (130) for receiving the information carried by said light signals (S_{VLC}).

10. System (200) according to claim 9, wherein said one or more light sources (100) comprise or consist of an LED light source.

11. System (200) according to claim 9, wherein said one or more light sources (100) comprise or consist of a laser light source.

## Patentansprüche

1. Tragbare Vorrichtung (1) zum Empfangen von mittels Lichtsignalen (S_{VLC}) übertragener Information, die von mindestens einer Lichtquelle (100) zum Beleuchten mindestens eines in einer Umgebung (120) angeordneten Gegenstands von Interesse (112, 114) emittiert werden, umfassend mindestens:
- ein Aufnahmegehäuse (3), das mit Befestigungsmitteln (5) versehen ist, die geeignet sind, die tragbare Vorrichtung (1) am Körper eines Benutzers (130) zu befestigen, wenn dieser die Umgebung (120) besucht; und, innerhalb des Aufnahmegehäuses (3) positioniert:
- einen optischen Sensor (7), der dazu konfiguriert ist, wenn der Benutzer (130) den Gegenstand von Interesse (112, 114) beobachtet, mindestens einen Teil der Lichtsignale (S_{VLC}) zu empfangen, die in der Umgebung von mindestens einem von dem Gegenstand von Interesse (112, 114) und einem dem Gegenstand von Interesse zugeordneten Element (113) empfangen und reflektiert oder gestreut werden, und entsprechende elektrische Signale (S_{IN}) zu emittieren, die die in den von der Lichtquelle (100) emittierten Lichtsignalen enthaltene Information anzeigen;
- eine elektronische Steuereinheit (9), die dazu konfiguriert ist, die von dem optischen Sensor (7) als Eingang empfangenen elektrischen Signale (S_{IN}) zu verarbeiten und daraus die an den Benutzer (130) zu übertragende Information zu extrahieren;
- Konfigurationsmittel (13, 14) zum selektiven Ändern des Sichtfelds der tragbaren Vorrichtung (1), wobei die Konfigurationsmittel dazu konfiguriert sind, automatisch betätigt zu werden, und wobei die elektronische Steuereinheit (9) dazu konfiguriert ist, die Konfigurationsmittel (13, 14) automatisch auf der Grundlage mindestens einer oder mehrerer der mittels der von der Lichtquelle (100) emittierten und von dem optischen Sensor (7) empfangenen Lichtsignale (S_{VLC}) übertragenen Informationen zu betätigen.

2. Tragbare Vorrichtung (1) nach Anspruch 1, ferner umfassend Kommunikationsmittel (10), die betriebsfähig mit der elektronischen Steuereinheit (9) verbunden und dazu konfiguriert sind, an eine von dem Benutzer (130) verwendbare entfernte Vorrichtung (150) die aus der elektronischen Steuereinheit (9) extrahierte Information zu übertragen.

3. Tragbare Vorrichtung (1) nach Anspruch 1, wobei die elektronische Steuereinheit (9) dazu konfiguriert ist, die Konfigurationsmittel automatisch auf der Grundlage vorkonfigurierter Ortskarten zu betätigen, die an Bord der tragbaren Vorrichtung (1) oder an Bord einer entfernt angeordneten Vorrichtung (150), die betriebsfähig mit der tragbaren Vorrichtung (1) verbindbar ist, gespeichert sind.

4. Tragbare Vorrichtung (1) nach Anspruch 1, wobei die Konfigurationsmittel eine Blende mit variabler Öffnung oder einen Verschluss (13) umfassen, der vor dem optischen Sensor (7) und in einem vorbestimmten Abstand von diesem an einer Außenwand des Aufnahmegehäuses (3) positioniert ist.

5. Tragbare Vorrichtung (1) nach Anspruch 1, wobei die Konfigurationsmittel ferner eine Betätigungsvorrichtung (14) umfassen, die dazu konfiguriert ist, die Blende oder den Verschluss (13) zu betätigen, und wirkgekoppelt mit der elektronischen Steuereinheit (9) verbunden ist.

6. Tragbare Vorrichtung (1) nach einem oder mehreren der vorhergehenden Ansprüche, umfassend eine Anzeige (11) zum Anzeigen der empfangenen Information.

7. Tragbare Vorrichtung (1) nach einem oder mehreren der vorhergehenden Ansprüche, wobei der optische Sensor (7) eine Photodiode umfasst.

8. Tragbare Vorrichtung (1) nach einem oder mehreren der vorhergehenden Ansprüche, wobei die Befestigungsmittel (5) aus der Gruppe ausgewählt sind, die einen Stift, einen Riemen, einen Clip, einen Haken, ein Band umfasst.

9. System (200) zum Übertragen von Information innerhalb einer Umgebung (120), in der sich ein oder mehrere Gegenstände von Interesse (112, 114) befinden, **dadurch gekennzeichnet, dass** es umfasst:
- eine oder mehrere innerhalb der Umgebung (120) angeordnete Lichtquellen (100), wobei jede der einen oder mehreren Lichtquellen (100) einem Gegenstand von Interesse (112, 114) zugeordnet und dazu konfiguriert ist, Lichtsignale (S_{VLC}) zu emittieren, die geeignet sind, mindestens einen Gegenstand von Interesse (112, 114) zu beleuchten, und die Information tragen, die dazu bestimmt ist, an mindestens einen Benutzer (130) übertragen zu werden, wenn dieser die Umgebung (120) besucht; und
- mindestens eine tragbare Vorrichtung (1) nach einem oder mehreren der vorhergehenden Ansprüche, die geeignet ist, am Körper des Benutzers (130) befestigt zu werden, um die von den Lichtsignalen (S_{VLC}) getragene Information zu empfangen.

10. System (200) nach Anspruch 9, wobei die eine oder die mehreren Lichtquellen (100) eine LED-Lichtquelle umfassen oder daraus bestehen.

11. System (200) nach Anspruch 9, wobei die eine oder die mehreren Lichtquellen (100) eine Laserlichtquelle umfassen oder daraus bestehen.

## Revendications

1. Dispositif portable (1) destiné à recevoir des informations transmises au moyen de signaux lumineux (S_{VLC}) émis par au moins une source lumineuse (100) destinée à éclairer au moins un objet d'intérêt (112, 114) disposé dans un environnement (120), comprenant au moins :
- un boîtier de confinement (3) pourvu de moyens de fixation (5) appropriés pour fixer le dispositif portable (1) au corps d'un utilisateur (130) lors de la visite de l'environnement (120); et, positionnés à l'intérieur du boîtier de confinement (3) :
- un capteur optique (7) configuré pour recevoir, lorsque ledit utilisateur (130) observe ledit objet d'intérêt (112, 114), au moins une partie des signaux lumineux (S_{VLC}) reçus et réfléchis ou diffusés dans l'environnement par au moins l'un parmi ledit objet d'intérêt (112, 114) et d'un élément (113) associé audit objet d'intérêt, et pour émettre des signaux électriques correspondants (S_{IN}) indicatifs desdites informations contenues dans les signaux lumineux émis par la source lumineuse (100) ;
- une unité de commande électronique (9) configurée pour traiter lesdits signaux électriques (S_{IN}) reçus en entrée du capteur optique (7) et en extraire lesdites informations à transmettre à l'utilisateur (130) ;
- des moyens de configuration (13, 14) destinés à modifier sélectivement le champ de vision du dispositif portable (1), lesdits moyens de configuration étant configurés pour être actionnés automatiquement, et ladite unité de commande électronique (9) étant configurée pour actionner automatiquement lesdits moyens de configuration (13, 14) sur la base d'au moins une ou plusieurs des informations transmises au moyen des signaux lumineux (S_{VLC}) émis par la source lumineuse (100) et reçus par le capteur optique (7).

2. Dispositif portable (1) selon la revendication 1, comprenant en outre des moyens de communication (10) reliés de manière fonctionnelle à ladite unité de commande électronique (9) et configurés pour transmettre à un dispositif distant (150) utilisable par l'utilisateur (130) les informations extraites par l'unité de commande électronique (9).

3. Dispositif portable (1) selon la revendication 1, dans lequel ladite unité de commande électronique (9) est configurée pour actionner automatiquement lesdits moyens de configuration sur la base de cartes de localisation préconfigurées stockées à bord du dispositif portable (1) ou à bord d'un dispositif distant (150) pouvant être relié de manière fonctionnelle au dispositif portable (1).

4. Dispositif portable (1) selon la revendication 1, dans lequel lesdits moyens de configuration comprennent un diaphragme à ouverture variable ou un obturateur (13) positionné devant et à une distance prédéterminée dudit capteur optique (7) au niveau d'une paroi externe du boîtier de confinement (3).

5. Dispositif portable (1) selon la revendication 1, dans lequel lesdits moyens de configuration comprennent en outre un dispositif d'actionnement (14) configuré pour actionner ledit diaphragme ou obturateur (13) et asservi de manière fonctionnelle à l'unité de commande électronique (9).

6. Dispositif portable (1) selon une ou plusieurs des revendications précédentes, comprenant un affichage (11) destiné à afficher les informations reçues.

7. Dispositif portable (1) selon une ou plusieurs des revendications précédentes, dans lequel ledit capteur optique (7) comprend une photodiode.

8. Dispositif portable (1) selon une ou plusieurs des revendications précédentes, dans lequel lesdits moyens de fixation (5) sont choisis dans le groupe comprenant une broche, une sangle, une pince, un crochet, une bande.

9. Système (200) destiné à transmettre des informations dans un environnement (120) dans lequel sont positionnés un ou plusieurs objets d'intérêt (112, 114), **caractérisé en ce qu'**il comprend :
- une ou plusieurs sources lumineuses (100) placées dans l'environnement (120), chacune desdites une ou plusieurs sources lumineuses (100) étant associée à celui-ci et configurée pour émettre des signaux lumineux (S_{VLC}) capables d'éclairer au moins un objet d'intérêt (112, 114) et portant des informations destinées à être transmises à au moins un utilisateur (130) lors de la visite de l'environnement (120) ; et
- au moins un dispositif portable (1) selon une ou plusieurs des revendications précédentes, approprié pour être fixé au corps dudit utilisateur (130) afin de recevoir les informations portées par lesdits signaux lumineux (S_{VLC}).

10. Système (200) selon la revendication 9, dans lequel lesdites une ou plusieurs sources lumineuses (100) comprennent ou consistent en une source lumineuse à LED.

11. Système (200) selon la revendication 9, dans lequel lesdites une ou plusieurs sources lumineuses (100) comprennent ou consistent en une source lumineuse laser.
